# EUROPEAN PATENT SPECIFICATION

(11) **EP 2 400 873 B1**
(45) Date of publication and mention of the grant of the patent: **04.05.2016**
(21) Application number: 10745737.6
(22) Date of filing: 27.02.2010
(51) Int. Cl.: A47F 8/00, G06F 3/00, A41H 5/01, G06Q 30/06

(54) **SYSTEM AND METHOD OF FACILITATING ON LINE PURCHASE OF CLOTHING**
SYSTEM UND VERFAHREN FÜR DEN ONLINE-ERWERB VON BEKLEIDUNG
SYSTÈME ET PROCÉDÉ DE FACILITATION D'ACHAT EN LIGNE DE VÊTEMENTS

(30) Priority: 27.02.2009 AU 2009900885
(43) Date of publication of application: 04.01.2012
(73) Proprietor: Clonnequin Pty Ltd, Melbourne, Victoria 3004 (AU)
(72) Inventor: VOLCHEK, Gennady, Brighton Victoria 3186 (AU)
(74) Representative: Fry, David John
(86) International application number: PCT/AU2010/000225
(87) International publication number: WO 2010/096878

(56) References cited:
- WO-A2-2008/113367
- SU-A1- 1 306 560
- US-A- 5 680 528
- US-B1- 6 404 426

## Description

### FIELD OF THE INVENTION

The present invention relates to a system and method of facilitating the making, altering and/or purchase of clothing, shoes or other accessories for which fit is an important criteria. In particular, the system and method involves use of a mannequin with external contours capable of adjustment in order to resemble the actual body shape of a customer which may be used to provide the customer with a realistic visual guide when purchasing fitted items such as clothing. The system and method is particularly useful in an on-line shopping environment.

### BACKGROUND OF THE INVENTION

When purchasing clothing in clothes shops, or using an on-line shopping system such as Amazon.com for example, items are typically chosen by their two dimensional appearance alone. For example, in shops, items of clothing in one size are displayed on mannequins that typically replicate the body shape of tall, slim and athletic male and female human beings. In the on-line environment, items are chosen from static images on web pages and, typically, the size of clothing is selected from a drop down list that allows a choice of size according to present sizing practices.

More often than not, items which may have appeared desirable when viewed on mannequins and on-line images, or even to a certain extent in the two dimensional reflection of a mirror in a shop changing room, do not appear as desirable when the clothes arrive home and the customer has more time and greater resources to judge whether they have chosen the right article to suit their body shape and taste. Both in the real world and on-line environments, it is difficult for a customer to obtain a realistic, three-dimensional view of how they would appear in a desired item of clothing, and how the clothing will fit.

This problem is exacerbated because of sizing variations between countries, clothing manufacturers, and even in a manufacturer's own range of clothing.

A mannequin with a system and a method according to the state of the Art is disclosed in the documents WO-2008/113367 and US-4.885.844.

It is therefore an object of the present invention to ameliorate the aforementioned problems or at least provide the public with a useful alternative.

It is a further object of the present invention to provide a system and method for facilitating the purchase of clothing.

### SUMMARY OF THE INVENTION

In one aspect, the present invention provides a mannequin including:
a body which substantially resembles that of a prospective customer with an outer contour defined over at least part of the body by a plurality of adjustable devices that are operable to adjust their physical dimensions; and
a data interface operably connected to the plurality of devices such that they are adjusted to define an outer contour according to data received from the interface;
wherein the received data represents the outer physical dimensions of a customer.

The mannequin is adapted to be fitted with an article of clothing to thereby provide the customer with a realistic, three dimensional view of how the customer would appear in the article of clothing. The mannequin with the article of clothing fitted may be viewed directly by the customer in the instance of an in-store fitting or may be viewed by use of a data communications network where the mannequin is in a remote location from the customer. In the first instance, use of a mannequin in-store enables a customer to directly view how the article of clothing will fit their body without the requirement to try the clothing themselves.

The mannequin includes a plurality of body parts, including arms, legs, a neck and a torso, whereby at least one dimension of at least one of the parts, such as the length and width, is adjustable.

The mannequin may include feet.

The mannequin includes an outer contour defined by the distal extremity of the plurality of adjustable devices disposed on the body. The devices includes pressure sensors for detecting the amount of pressure exerted by the article of clothing on the respective part of the mannequin outer contour. The pressure detected by the devices is provided to the customer to indicate the different pressures.

In an embodiment, the mannequin includes at least some devices that are pressure sensitive and which retract move inwardly in accordance with the amount of pressure applied by a fitted item such as an article of clothing.

The mannequin may also include an outer layer of material adapted to replicate at least one of the characteristics of human skin.
In another aspect, the present invention provides a system for the making, alteration and/or purchase of fitted items, the system including a measurement means for obtaining the outer physical characteristics of a prospective customer, and an adjustable mannequin having a data interface and adjustable devices that are operable to adjust their physical dimensions to define an outer contour of the mannequin according to data received from the interface, the data representing the outer physical dimensions of the prospective customer, wherein the mannequin is fitted with an item subsequent to the mannequin adopting the outer physical characteristics to thereby provide the customer with a view of how the item would appear when fitted to the prospective customer.

The outer physical characteristics of the customer may include height, length and width of at least some of the body parts.

An outer contour of at least some of the body parts of the mannequin may be defined by the distal extremity of the plurality of devices disposed on the mannequin body.

The system includes a mannequin with pressure sensors associated with individual devices to provide an indication of the tightness of fit of an item.

In an embodiment the devices are pressure sensitive and move inwardly upon the application of pressure.
The system may be adapted for use in a retail environment whereby the mannequin is a physical structure resembling a human body.

In a yet further aspect, the present invention provides a method of facilitating the making, alteration and/or purchase of fitted items, the method including obtaining outer physical dimensions of a prospective customer, providing an adjustable mannequin to adopt the outer physical dimensions, and fitting the mannequin with an item to thereby provide the prospective customer with a view of how the item would appear when fitted to the customer.

The step of obtaining the outer physical characteristics of a prospective customer may include obtaining dimensions of the customer such as height, length and width of various body parts.

The step of obtaining outer physical dimensions may include obtaining the outer contour or cross section of at least some of the body parts.

The step of providing an adjustable mannequin to adopt the outer physical dimensions of a prospective customer may include adjusting the mannequin to adopt the dimensions of the customer.

The outer contour of each body part may be defined by a plurality of adjustable devices disposed on the mannequin body, each device operable to alter the physical dimensions and the provision of an adjustable mannequin to adopt the physical dimensions includes adjusting the devices in order for the mannequin to adopt substantially the same outer contour as that of the customer.

The method includes the further step of indicating to the customer how the article item will fit.

The method may also include the further step of storing the individual outer physical dimensions of different customers.

In another aspect, the present invention provides a database of the outer physical dimensions of customers for use in accordance with the system and method of the present invention.

In yet a further aspect, the present invention provides a body scanning unit that scans and records the outer physical dimensions of a customer for use in accordance with the system and method of the present invention.

### BRIEF DESCRIPTION OF THE DRAWINGS

The accompanying drawings, which are incorporated in and constitute a part of this specification, illustrate implementations of the invention and, together with the description, serve to explain the invention. In the drawings:
- Figure 1: illustrates a front perspective view of a mannequin including extendible body sections and extendible body contour pins in accordance with a first embodiment of the invention;
- Figure 2: illustrates a front perspective view of a mannequin including extendible body sections and extendible body contour pins in accordance with a second embodiment of the invention;
- Figure 3: illustrates a front perspective view of the mannequin of Figure 2 including extended body sections and retracted body contour pins;
- Figure 4: illustrates a front perspective view of the mannequin of Figure 3 fitted with outer layer to replicate human skin;
- Figure 5: illustrates a front perspective view of the mannequin of Figure 4 fitted with a shirt;
- Figure 6: illustrates a front perspective view of the mannequin of Figure 2 including extended body sections, body contour pins in their extended position to replicate the body contours of a customer, and fitted with an outer layer to replicate human skin;
- Figure 7: illustrates a front perspective view of the mannequin of Figure 6 fitted with a shirt;
- Figure 8a: illustrates a cross sectional view through the torso of the mannequin of Figure 2 with the body contour pins detailed in their retracted position;
- Figure 8b: illustrates a cross sectional view through the torso of the mannequin of Figure 2 with the body contour pins detailed in an extended position to replicate the body contours of a customer;
- Figure 8c: illustrates a cross sectional view through the torso of the mannequin of Figure 8b fitted with an outer layer to replicate human skin; and
- Figure 9: illustrates a cross sectional view through the torso of a mannequin in accordance with a third embodiment of the invention.

### DESCRIPTION OF EMBODIMENTS OF THE INVENTION

The following detailed description of the invention refers to the accompanying drawings. Although the description includes exemplary embodiments, other embodiments are possible, and changes may be made to the embodiments described without departing from the scope of the invention. Wherever possible, the same reference numbers will be used throughout the drawings and the following description to refer to the same and like parts.

The present invention relates to a system and method of facilitating the making, alteration and/or purchase of fitted items such as clothing in stores and/or on-line shopping environments using an adjustable mannequin. In an embodiment, the mannequin embodied herein includes a plurality of body parts which are each extendible, and a plurality of body contour pins disposed on each body part which may be extended outwardly to replicate the body shape of a potential customer. The skilled addressee will realize that in being able to successfully replicate the body shape of a customer, and fitting the mannequin with one or more articles of clothing, a customer is provided with a three dimensional view of what they themselves would look like if they were fitted with the same article(s) of clothing. This may be achieved by placing a number of cameras around the mannequin that may collect images of the mannequin in various positions (e.g. standing, sitting, arms extended, elbows bent, etc). Where the mannequin in located in-store, the customer may request the fitment of an article of clothing to the mannequin so that they may directly view the article of clothing fitted to a mannequin confirming to their own outer physical dimensions. Alternatively, where the mannequin is located remotely from the customer, the customer may be provided with images of the article of clothing fitted to the mannequin. In this regard, the images provide to the customer may include two dimensional digital images or alternatively, may include three dimensional or holographic images for the customer to view the article of clothing as it would appear on themselves. Of course, future developments in technology may provide improvements in relation to the manner in which customers may view the article of clothing on the adjustable mannequin and the invention should not be considered to be restricted to only those methods available for the provision of images according to present technologies.

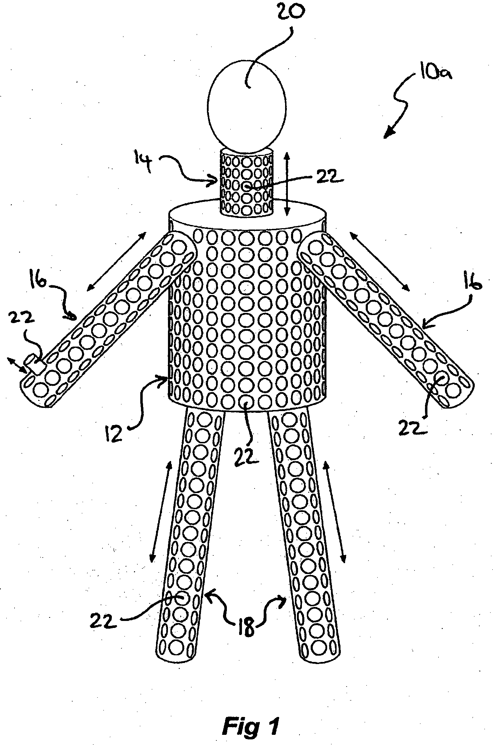

Turning now to Figure 1, there is shown a mannequin 10a according to a first basic embodiment of the present invention. In particular, the mannequin 10a includes a torso 12 in the form of an elongated elliptical cylinder, and a neck 14, arms 16 and legs 18 each being in the form of elongated cylinders. A head portion 20 is also disposed above the neck 14. The mannequin 10a replicates in a very basic form a human body.

The first step in replicating the body of a customer is to adopt the height of the body, and the length of each limb. To this end, each of the body parts is made to be extendible to and lockable at desired positions. For example, if details such as a customer's height, torso and waist dimensions, arm length, leg length, etc, are known, then the mannequin 10a can be adjusted to these dimensions. Extension of the body parts may be achieved using any known means, including for example having telescopic extensions (not shown), or having parts connected to one another by moveable pistons (not shown), or by electronic means. Other means may include the use of servo motors that can move the parts along a selectable distance.

Once the height of the mannequin 10a, and the length of each body part is adjusted according to a customer's dimensions, then all that is required to complete the replication is to adjust the mannequin's body shape and contour. In the embodiment shown, a plurality of body contour pins 22 are disposed on each of the torso 12, neck 14, arms 16 and legs 18. The pins 22 are adapted to extend outwardly from each body part, and also to be retracted again to their original position so that the process can be repeated. Once again, this may be achieved using any suitable known means and may use accurate servo motors. Alternatively, the pins may be telescopic such that extension and / or retraction of a pin only alters the physical location of one end of the pin.

In another embodiment, inflatable bladders are used to adjust the outer contour of the mannequin to resemble that of a customer and in one particular embodiment, a combination of extendible / retractable pins and inflatable bladders is used as the two types of devices are suited to defining the outer contour of the mannequin for different parts of a body. Further embodiments may use nano wire technology wherein the length of the wire is dependent upon the temperature of the wire or the electrical current passing through the wire. This technology may be particularly useful for adjusting the length of representative body parts such as the length of arms and/or legs.

Of course, persons skilled in the relevant field of technology will also appreciate that devices operating either hydraulically and/or pneumatically may equally be used to define the outer contour of the mannequin.

In less complex embodiments, springs may be used as the devices for defining the outer contour of the mannequin.

In one embodiment, in an in-shop environment, the customer may be measured up by a shop assistant and such data input into a computing device that is operatively connected to the mannequin for moving the pins. In an on-line environment, such data may simply be uploaded over the internet by a customer. Movement of the pins 22 may also be electronically controlled in accordance with such input contour data.

In an alternate configuration, a scanning system could be used, or technology similar to three dimensional pin art sculpture or a three dimensional scanning system using lasers or any other technology for the purpose of scanning the outer contour of a customer. The present invention is not limited to any one manner of obtaining body contour data from a customer, or for conveying such data to the mannequin to adjust the physical location of the pins or other devices for establishing an outer contour of the mannequin such that it resembles that of the customer.

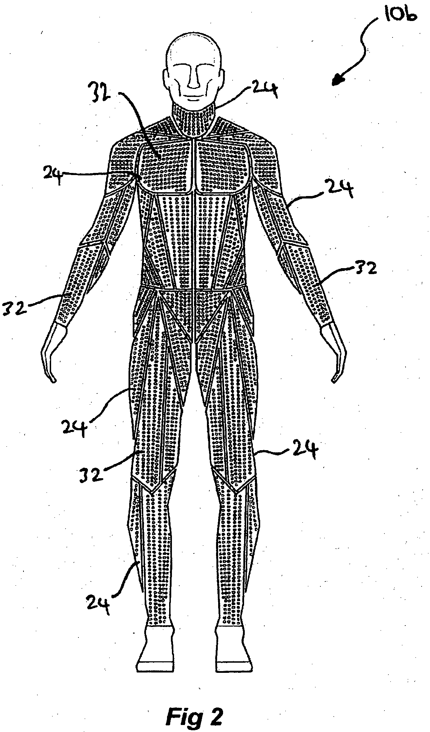

Figure 2 illustrates a more sophisticated mannequin 10b in accordance with another embodiment of the invention, this mannequin 10b more closely resembling a human body. The mannequin 10b includes a plurality of body "panels" 24 which substantially resemble the major muscles of the human body, for example, there is one panel 24 for each bicep muscle, one panel 24 for each pectoral muscle, and so on. Rather than including a large number of panels, a single curved panel 24 may be used where required, as per the illustrated neck panel for example.

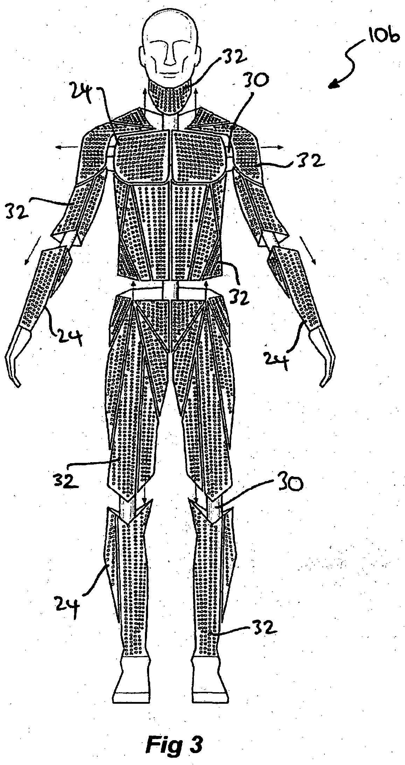

Once again, each of the main body parts of the mannequin 10b are extensible. Figure 3 illustrates the mannequin 10b having undergone body part extension to more authentically replicate the dimensions of a customer. In particular, the shoulders have been broadened, and the torso, arms, legs have been extended. In the embodiment shown, skeletal shafts 30 connect each of the extendible body parts, and again, their extension could be achieved using any known means such as piston arrangements and the like.

As per mannequin 10b, a plurality of body contour pins 32 are disposed on each panel and adapted to extend outwardly to replicate the body contours of the customer. The contour pins 32 are of lesser diameter as compared with pins 22 detailed in Figure 1, and are more densely populated resulting in a more accurate resemblance of the customer's contours. This however is by way of example only, and the larger more dispersed pins of mannequin 10a could equally well be used.

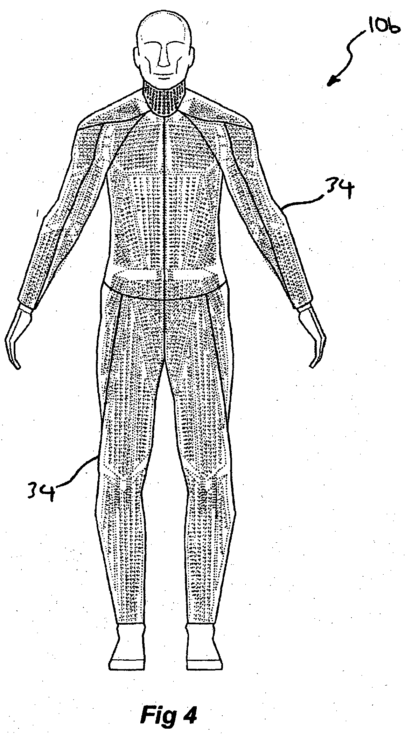

Figure 4 illustrates the mannequin of 10b including an outer layer of material 34 adapted to replicate human skin. The material 34 may have elastic properties so that it hugs the mannequin tightly and may remain fitted at all times, even whilst the mannequin 10b undergoes transformation. It is envisaged that the material 34 will be resilient enough to be used over the life of the mannequin 10b.

The skilled addressee should already realize some of the benefits of the present invention. The mannequin in its most basic form 10a, as well as in a more sophisticated form 10b, is useful both in over-the-counter and on-line purchase environments as it provides a means of visually demonstrating to a customer how they will look when wearing particular items of clothing. This is achieved by replicating the outer physical characteristics of the customer. In-store, the mannequin may be a physical body, or may be in the form of an image which customers can view, as would obviously also be the case in an on-line purchasing environment.

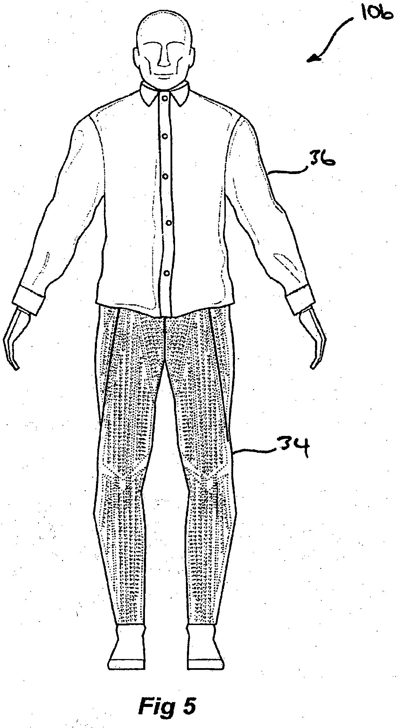

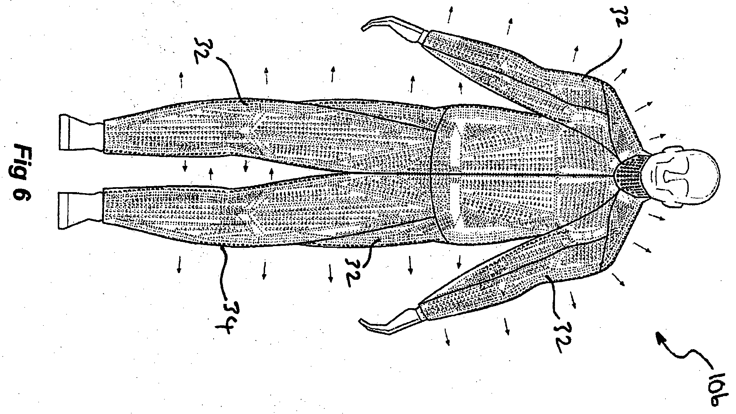

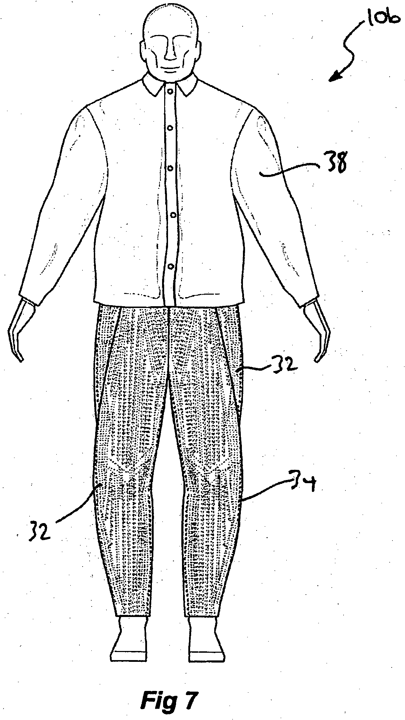

Figure 5 for example illustrates how a sleeved shirt 36 would appear on a person having a body shape roughly similar to that of the mannequin 10b, whereby the pins 32 have not needed to be extended outwards, but only the body parts extended slightly. Figure 6 illustrates how the mannequin 10b would appear once data from a larger person has been entered into the system. The pins 34 have extended outwardly from the majority of the panels 24 to an extent which simulates the body contours of the customer. It can also be appreciated that the outer skin 34 has been stretched. Figure 7 illustrates how a sleeved shirt 38 would be viewed on this mannequin 10b.

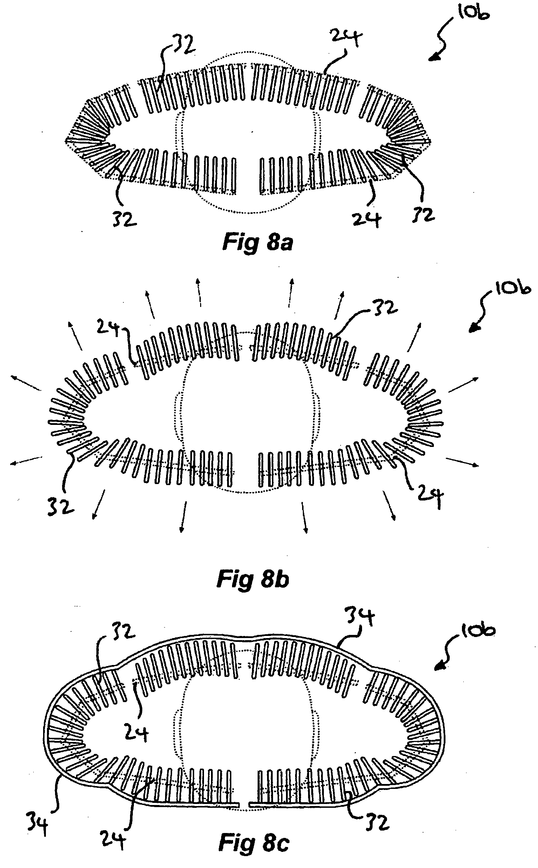

Figures 8a-8b illustrate progressively how the pins 32 move from a retracted position inside the mannequin 10b to a different extended position outside the mannequin 10b depending on the input shape of the customer. In particular, a cross section through the torso region of the mannequin 10b is shown. Figure 8c illustrates the same mannequin having the outer smooth layer of material 34 applied, replicating human skin.

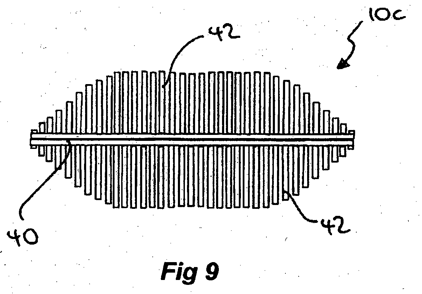

Figure 9 illustrates a cross sectional view of the torso of a still further mannequin embodiment 10c. Rather than having a hollow body made up of multiple panels as per mannequin 10b, there is a single planar panel 40 extending through a vertical axis of the body, and the pins 42 are made to extend outwardly therefrom to an extent which is similar to that of the location of the panels of mannequin 10b. Then, the pins 42 can be extended as required by any known means, for example, they may be telescopic.

In a further aspect of the invention, the fit of the article of clothing can also be ascertained, not just its appearance. For example, in each of the mannequins embodied herein, the body contour pins could include at their tips pressure sensors (not shown) which may be used to detect the amount of pressure the article of clothing is applying at any one point on the mannequin, and hence the pressure that would be applied to the corresponding location on the customer when the article of clothing is fitted. An example where this may prove useful is where a person may have an unusually large neck width, and wishes to purchase a shirt. Use of the mannequins will indicate that even though the shirt may be suited to the customer's torso and arm regions, it may provide an uncomfortable pressure around the neck. In using pressure sensors or the like, such information can be retrieved and relayed back to the customer, who may then make a more informed decision. In one embodiment the information may be displayed on a screen with different colours representing different pressures so that information regarding regions where pressure applied to the customer by the article of clothing may be excessive and uncomfortable can be easily understood. In another embodiment, the customer may be provided with a simple report regarding the fit of the item of clothing.

Rather than using pressure sensors (not shown), the pins 22 and 32 may be touch sensitive such that once they have been extended to suit the body contours of the customer, they will also retract once an article of clothing bears against them. Thus the pins may be biased and retract upon the exertion of pressure to indicate to the customer how the article of clothing would appear.

Such movement may be recorded, and this will also provide an indication of where, and to what extent, the article of clothing is applying pressure on the body. Again, once this information is retrieved, it can be relayed back to the customer. Obviously, when using pressure sensitive pins as described, the use of an outer layer of material to replicate human skin may not be useable.

The invention is particularly well suited to facilitating the purchase of clothing in an on-line shopping environment, using a mannequin that can be adjusted to accurately reflect the body of a customer to aid in their assessment of the look and fit of garments before committing to purchasing the article of clothing. In this regard, a customer may use a personal communications device such as a personal computer, a personal digital assistant or a suitably equipped cell phone to review a range of clothing offered for sale by an on-line retailer and may, subsequent to providing data representing their outer physical dimensions, request images of various articles of clothing fitted to a mannequin adjusted to their size. During this process, a sales assistant may also provide guidance regarding the customers selection of articles of clothin and may suggest alternative articles or perhaps alternative sizes that may better suit the customer.

In an embodiment of the invention, a customer operates software executing on the personal communications device to effect the steps required to select and request the fitment of articles of clothing to a mannequin and to order or decline the purchase of articles of clothing subsequent to reviewing images of same. As an alternative, the customer may request alterations to the article of clothing to better suit their bady shape and size.

It is also to be understood that the present invention may equally well be used for the purchase of footwear such as shoes and boots. Although not illustrated, the reader would appreciate that as with the body, pins may be used to represent a persons foot and would enable the user to see how the shoe or boot would appear. Together with pressure sensors it would also indicate to the user whether the footwear would be comfortable.

It will also be understood by the reader that the present invention may be applied to incomplete mannequins or at the very least to individual body parts. Thus different clothing and/or footwear shops may only need a part of the body. For example, a retail outlet that sells watches may only wish to have a representative arm to show potential purchasers what a watch may look lie on their arm. Similarly jewellery shops may wish to have a representative hand. By keeping a database of customers the shop may email their clients a catalogue illustrating what a piece of jewellery may look like on their hand or wrist. The same applies to footwear retail outlets and those providing gloves and hats. Thus it is to be understood that the present invention is not to be limited to a complete mannequin.

In another embodiment, jewellery, such as necklaces, could also be displayed on the mannequin giving the user the opportunity to see what they would look like and assist in the purchase of such items.

Whilst the invention is particularly useful for on-line shopping for articles of manufactured clothing, it may also be used in instances where a customer requires clothing to be tailor made. In this instance, the customer has their outer physical dimensions measured and supplies same to a tailor who is equipped with an adjustable mannequin. The tailor may then receive instructions from the customer regarding the garment required and may provide the tailor with their outer physical dimensions. The tailor may then proceed to make the garment using the mannequin adjusted to the customer's physical size. Of course, tailors would need to have access to an adjustable mannequin, however, the use of the invention in this example substantially reduces the requirement for the customer to make repeated trips to the tailor for fitting sessions. One particular example where this would be considered most useful would be the design and making of wedding dresses.

Another benefit of such a use of the invention is that the tailor could be remote from the customer yet still able to commence the manufacture of a garment. For example, the tailor could be overseas as compared with the location of the customer or perhaps, country based customers could provide data pertaining to their outer physical dimensions to a tailor in the city. This particular embodiment also applies to instances where a customer requires alterations to an existing article of clothin and may send the article to a tailor. The tailor may be able to accurately alter the garment by using the adjustable mannequin along with up to date data regarding the customer's outer physical dimensions.

The invention is also useful for in-shop retail outlets where customers prefer to avoid the fitting of garments. This is also beneficial to the shop keeper as it prevents soiling of garments. In the event that a garment does not fit as well as expected by the customer, an adjustable mannequin may then be used to determine the alterations required to suit the customer.

Irrespective of the actual mode of viewing and / or purchasing articles of clothing with the use of an adjustable mannequin, the collection of the outer physical dimensions of customers will enable the development of a universal sizing system wherein customers may be provided with a number, or some other indicator, that defines their size. Over time, it is expected that retail outlets may adopt the universal sizing system so that customers may then recite their size (according to the universal sizing system) to retail clothing suppliers. In this particular example, customers may not be able to locate their precise size in a retail outlet but they should at least be able to locate an article of clothing that is close to their size irrespective of where the retail clothing outlet is located. Accordingly, with such a system, customers in one country can recite their universal size to someone in another country and they will accurately understand the size requirements of the customer.

The reader will also appreciate that whilst the present invention has been described with a particular application being buying personal clothing it may equally well be applied in other circumstances. For example, the equestrian industry may benefit from the present invention in that a user may obtain a shape of their horse and subsequently determine how different saddles would fit and appear on a horse, and whether the saddle would indeed be comfortable for the horse in an embodiment that uses pressure sensors.

Further advantages and improvements may be made to the present invention without deviating from its scope. Although the invention has been shown and described in what is conceived to be the most practical and preferred embodiment, it is recognized that departures may be made therefrom within the scope of the invention, which is not to be limited to the details disclosed herein but is to be accorded the full scope of the claims so as to embrace any and all equivalent devices and apparatus.

## Claims

1. A mannequin (10) including :
a body which substantially resembles that of a prospective customer with an outer contour defined over at least part of the body by a plurality of adjustable devices that are operable to adjust their physical dimensions,
a data interface operably connected to the plurality of devices such that they are adjusted to define the outer contour according to data received from the interface;
wherein the received data represents the outer physical dimensions of a customer;
**characterised in that** the plurality of adjustable devices include:
a plurality of body parts (12, 14, 16, 18, 20), and
a plurality of body contour pins (22, 32) disposed on one or more of the body parts,
wherein at least one dimension of at least one of the body parts is adjustable and the body contour pins are adapted to be extended outwardly from the one or more body parts to define the outer contour; and
wherein at least one of the plurality of body contour pins include at least one pressure sensor for detecting the amount of pressure exerted by a fitted item on the at least one body contour pin; and
wherein the data interface is operable to relay the detected amount of pressure to the customer.

2. A mannequin according to claim 1 fitted with an article of clothing to thereby provide the customer with a realistic, three dimensional view of how they would appear with the article of clothing fitted.

3. A mannequin according to claim 1 wherein the plurality of body parts includes arms (16), legs (18), a neck (14) and a torso (12),

4. A mannequin according to claim 3 further including feet.

5. A mannequin according to claim 1 wherein the body contour pins are further adapted to be retracted from their extended position.

6. A mannequin according to claim 5, wherein the body contour pins are telescopic such that extension/retraction only alters the physical location of a distal end of the pins.

7. A mannequin according to claim 1, wherein the plurality of devices are operable to lock in position once a required adjustment has been effected.

8. A mannequin according to claim 1, wherein the pressure detected is displayed on a visual display to indicate the detected pressure.

9. A mannequin according to claim 1, wherein at least some of the body contour pins are pressure sensitive and more inwardly in accordance with the amount of pressure applied by the fitted item.

10. A mannequin according to claim 1, and further including a an outer layer of material that replicates at least one of the characteristics of human skin.

11. A system for facilitating the making, alteration and/or purchase of fitted items, the system including :
a measurement means for obtaining the outer physical characteristics of prospective customer; and
an adjustable mannequin having a data interface; and
a plurality of adjustable devices that are operable to adjust their physical dimensions to define an outer contour of the mannequin according to data received from the interface, the plurality of adjustable devices including:
a plurality of body parts, and
a plurality of body contour pins disposed on one or more of the body parts,
wherein at least one dimension of at least one of the body parts is adjustable and the body contour pins are adapted to be extended outwardly from the one or more body parts to define the outer contour;
the data representing the outer physical dimensions of the prospective customer;
wherein the mannequin is fitted with an item subsequent to the mannequin adopting the outer physical characteristics to thereby provide the customer with a view of how the item would appear when fitted to the prospective customer;
further including pressure sensors associated with individual body contour pins to provide an indication of the tightness of fit of an item, wherein the data interface is operable to relay the detected amount of pressure to the customer.

12. A system according to claim 11, wherein the physical characteristics include the dimensions of the customer, including height, length and width of at least some of the body parts.

13. A system according to claim 11 wherein the body contour pins are pressure sensitive and move inwardly upon the exertion of pressure by a fitted item.

14. A system according to claim 11 adapted for use in a retail environment whereby the mannequin is a physical structure resembling a human body and the fitted items are articles of clothing.

15. A method of facilitating the making, alteration and/or purchase of fitted items, the method including:
obtaining the required outer physical dimensions of a prospective customer;
providing an adjustable mannequin of claim 1 to adopt the outer physical dimensions; and
fitting the mannequin with an item to thereby provide the prospective customer with a view of how the item would appear when fitted to the customer.

16. A method according to claim 15 wherein obtaining the outer physical dimensions of a prospective customer includes obtaining dimensions of the customer such as height, length and width of various body parts.

17. A method according to claim 15 wherein obtaining outer physical dimensions includes obtaining the outer contour or cross section of at least some of the body parts.

18. A method according to claim 15 wherein providing an adjustable mannequin to adopt the outer physical dimensions of a prospective customer includes adjusting the mannequin to adopt the outer dimensions of the prospective customer.

19. A method according to claim 15 including the further step of providing images to the customer of the item fitted to the mannequin.

20. A method according to claim 19 wherein the images are communicated to the customer by use of a data communication network.

21. A method according to claim 20 wherein the customer operates a personal communications device to receive images displaying the item fitted to the mannequin and operates software executing on the personal communication device to order or decline the purchase and supply of the item.

22. A method according to claim 21 wherein the item is an article of clothing and the customer operates the software to select an article of clothing of interest from a range of images of clothing available for purchase.

23. A method according to claim 22 wherein the customer selects a clothing article of interest and provides their outer physical dimensions along with a request to fit the article to a mannequin adjusted to the customer's outer physical dimensions.

24. A method according to claim 23 wherein, subsequent to receiving images of the clothing article fitted to the mannequin, the customer operates the software executing on the personal communication device to request alternations to the article to improve the fit of same.

25. A method according to any one of claims 22 to 24 wherein a sales assistant transmits to the customer recommendations regarding alternative articles of clothing and/or alternative sizes of articles of clothing for consideration by the customer.

26. A method according to any one of claims 22 to 25 wherein the sales assistant transmits to the customer recommendations regarding alterations to the article of clothing fitted to the mannequin to better suit the requirements and/or preferences of the customer.

27. A method according to claim 15 wherein there is a further step of storing the individual outer physical dimensions of prospective customers.

## Patentansprüche

1. Ausstellungspuppe (10), die folgendes aufweist:
einen Körper, der im Wesentlichen den Körper eines Kaufinteressenten ähnlich ist, mit einer äußeren Kontur, die über wenigstens einen Teil des Körpers durch eine Mehrzahl einstellbarer Vorrichtungen definiert ist, die so funktionsfähig sind, dass deren Abmessungen anpassbar sind;
eine Datenschnittstelle, die so funktionsfähig ist, dass sie mit der Mehrzahl von Vorrichtungen verbunden werden kann, so dass diese so angepasst werden, das sie die äußere Kontur gemäß den von der Schnittstelle empfangenen Daten anpassen;
wobei die empfangenen Daten die äußeren Abmessungen eines Kunden darstellen; **dadurch gekennzeichnet, dass** die Mehrzahl einstellbarer Vorrichtungen folgendes aufweist:
eine Mehrzahl von Körperteilen (12, 14, 16, 18, 20); und
eine Mehrzahl von Körperkonturstiften (22, 32), die an einem oder mehreren der Körperteile angeordnet sind;
wobei wenigstens eine Abmessung wenigstens eines der Körperteile anpassbar ist, und wobei die Körperkonturstifte von dem einen oder den mehreren Körperteilen auswärts erweitert werden können, um die äußere Kontur zu definieren; und
wobei wenigstens einer der Mehrzahl von Körperkonturstiften wenigstens einen Drucksensor zum Erkennen der Druckhöhe aufweist, die von einem angezogenen Artikel auf den wenigstens einen Körperkonturstift ausgeübt wird; und
wobei die Datenschnittstelle so funktionsfähig ist, dass sie die erkannte Druckhöhe an den Kunden weitergibt.

2. Ausstellungspuppe nach Anspruch 1, angezogen mit einem Kleidungsstück, um für den Kunden dadurch eine realistische, dreidimensionale Ansicht vorzusehen, wie der Kunde mit dem angezogenen Kleidungsstück aussehen würde.

3. Ausstellungspuppe nach Anspruch 1, wobei die Mehrzahl von Körperteilen Arme (16), Beine (18), einen Hals (14) und einen Rumpf (12) aufweist.

4. Ausstellungspuppe nach Anspruch 3, die ferner Füße aufweist.

5. Ausstellungspuppe nach Anspruch 1, wobei die Körperkonturstifte ferner aus ihrer erweiterten Position eingezogen werden können.

6. Ausstellungspuppe nach Anspruch 5, wobei die Körperkonturstifte teleskopisch sind, so dass die Erweiterung/das Einziehen nur die physische Position eines distalen Endes der Stifte verändert.

7. Ausstellungspuppe nach Anspruch 1, wobei die Mehrzahl von Vorrichtungen so funktionsfähig ist, dass sie nachdem eine erforderliche Anpassung umgesetzt worden ist, an der Position verriegelt werden.

8. Ausstellungspuppe nach Anspruch 1, wobei der erkannte Druck auf einer Sichtanzeige angezeigt wird, um den erkannten Druck anzuzeigen.

9. Ausstellungspuppe nach Anspruch 1, wobei wenigstens einige der Körperkonturstifte druckempfindlich sind und sich gemäß der auf den angezogenen Artikel ausgeübten Druckhöhe weiter einwärts befinden.

10. Ausstellungspuppe nach Anspruch 1, ferner mit einer äußeren Materialschicht, welche wenigstens eine der Eigenschaften menschlicher Haut reproduziert.

11. System zur Erleichterung der Herstellung, Veränderung und/oder zum Kauf angezogener Artikel, wobei das System folgendes aufweist:
eine Messeinrichtung, um die äußeren körperlichen Eigenschaften von Kaufinteressenten zu erhalten; und
eine anpassbare Ausstellungspuppe mit einer Datenschnittstelle; und
eine Mehrzahl einstellbarer Vorrichtungen, die so funktionsfähig sind, dass sie ihre Abmessungen so anpassen, dass sie eine äußere Kontur der Ausstellungspuppe gemäß von der Schnittstelle empfangenen Daten definieren, wobei die Mehrzahl einstellbarer Vorrichtungen folgendes aufweist:
eine Mehrzahl von Körperteilen; und
eine Mehrzahl von Körperkonturstiften, die an einem oder mehreren der Körperteile angeordnet sind;
wobei wenigstens eine Abmessung wenigstens eines der Körperteile anpassbar ist, und wobei die Körperkonturstifte von dem einen oder den mehreren Körperteilen auswärts erweitert werden können, um die äußere Kontur zu definieren; wobei
die Daten die Außenabmessungen des Kaufinteressenten darstellen;
wobei der Ausstellungspuppe ein Artikel angezogen wird, nachdem die äußeren körperlichen Eigenschaften übernommen worden sind, um für den Kunden dadurch eine Ansicht vorzusehen, wie der Artikel aussehen würde, wenn der Kunden ihn angezogen hätte;
ferner mit Drucksensoren, die den einzelnen Körperkonturstiften zugeordnet sind, um die Enge des Sitzes eines Artikels anzuzeigen, wobei die Datenschnittstelle so funktionsfähig ist, dass sie die erkannte Druckhöhe an den Kunden weitergibt.

12. System nach Anspruch 11, wobei die körperlichen Eigenschaften die Abmessungen des Kunden aufweisen, einschließlich Höhe, Länge und Breite wenigstens einiger der Körperteile.

13. System nach Anspruch 11, wobei die Körperkonturstifte druckempfindlich sind und sich bei durch den angezogenen Artikel ausgeübten Druckhöhe einwärts bewegen.

14. System nach Anspruch 11, geeignet zur Verwendung in einer Einzelhandelsumgebung, wobei die Ausstellungspuppe eine körperliche Struktur ist, die einem menschlichen Körper ähnlich ist, und wobei die angezogenen Artikel Kleidungsstücke sind.

15. Verfahren zur Erleichterung der Herstellung, Veränderung und/oder zum Kauf angezogener Artikel, wobei das Verfahren folgendes aufweist:
Erhalten der erforderlichen Abmessungen eines Kaufinteressenten;
Bereitstellen einer anpassbaren Ausstellungspuppe nach Anspruch 1, um die äußeren Abmessungen zu übernehmen; und
Anziehen der Ausstellungspuppe mit einem Artikel, um dadurch dem Kaufinteressenten eine Ansicht vorzusehen, wie der Artikel aussehen würde, wenn der Kunden ihn angezogen hätte.

16. Verfahren nach Anspruch 15, wobei das Erhalten der erforderlichen Abmessungen eines Kaufinteressenten das Erhalten der Abmessungen des Kunden aufweist, wie etwa der Höhe, der Länge und der Breite verschiedener Körperteile.

17. Verfahren nach Anspruch 15, wobei das Erhalten der erforderlichen Abmessungen eines Kaufinteressenten das Erhalten der äußeren Kontur oder des Querschnitts wenigstens einiger der Körperteile aufweist.

18. Verfahren nach Anspruch 15, wobei das Bereitstellen einer anpassbaren Ausstellungspuppe, um die äußeren Abmessungen eines Kaufinteressenten zu übernehmen, das Anpassen der Ausstellungspuppe aufweist, um die äußeren Maße des Kaufinteressenten zu übernehmen.

19. Verfahren nach Anspruch 15, wobei dieses den weiteren Schritt des Bereitstellens von Bildern des der Ausstellungspuppe angezogenen Artikels an den Kunden aufweist.

20. Verfahren nach Anspruch 19, wobei die Bilder unter Verwendung eines Datenübertragungsnetzes zu dem Kunden übertragen wird.

21. Verfahren nach Anspruch 20, wobei der Kunde eine persönliche Kommunikationsvorrichtung verwendet, um Bilder zu empfangen, welche den der Ausstellungspuppe angezogenen Artikel anzeigen, und wobei der Kunde Software verwendet, die auf der persönlichen Kommunikationsvorrichtung ausgeführt wird, um den Kauf und die Lieferung des Artikels anzuweisen oder abzulehnen.

22. Verfahren nach Anspruch 21, wobei der Artikel ein Kleidungsstück ist, und wobei der Kunde Software verwendet, um ein relevantes Kleidungsstück aus einer Reihe von Bildern von zum Kauf angebotener Kleidungsstücke auszuwählen.

23. Verfahren nach Anspruch 22, wobei der Kunde ein relevantes Kleidungsstück auswählt und seine äußeren Abmessungen gemeinsam mit einer Anforderung bereitstellt, das Kleidungsstück einer Ausstellungspuppe anzuziehen, die an die äußeren Abmessungen des Kunden angepasst worden ist.

24. Verfahren nach Anspruch 23, wobei der Kunde nach dem Empfang von Bildern des der Ausstellungspuppe angezogenen Kleidungsstücks die Software verwendet, die auf der persönlichen Kommunikationsvorrichtung ausgeführt wird, um Anpassungen an dem Artikel zur Verbesserung des Sitzes des Artikels anzufordern.

25. Verfahren nach einem der Ansprüche 22 bis 24, wobei ein Verkaufsberater dem Kunden Empfehlungen übermittelt, welche alternative Kleidungsstücke und/oder alternative Größen von Kleidungsstücken zur Beachtung durch den Kunden betreffen.

26. Verfahren nach einem der Ansprüche 22 bis 25, wobei der Verkaufsberater dem Kunden Empfehlungen übermittelt, die Veränderungen des der Ausstellungspuppe angezogenen Kleidungsstücks betreffen, um den Anforderungen und/oder Präferenzen des Kunden besser zu entsprechen.

27. Verfahren nach Anspruch 15, ferner umfassend den weiteren Schritt des Speicherns der individuellen äußeren Abmessungen von Kaufinteressenten.

## Revendications

1. Mannequin (10) comprenant :
un corps qui ressemble sensiblement à celui d'un client potentiel, son contour extérieur étant défini sur au moins une partie du corps par une pluralité de dispositifs ajustables qui permettent d'ajuster leurs dimensions physiques,
une interface de données fonctionnellement connectée à la pluralité de dispositifs de sorte qu'ils soient ajustés pour définir le contour extérieur selon les données reçues de l'interface ; les données reçues représentant les dimensions physiques extérieures d'un client ;
**caractérisé en ce que** la pluralité de dispositifs ajustables comprend :
une pluralité de parties de corps (12, 14, 16, 18, 20), et
une pluralité de broches de contour de corps (22, 32) disposées sur une ou plusieurs parties de corps,
au moins une dimension d'au moins une des parties de corps étant ajustable et les broches de contour de corps étant conçues pour se déployer vers l'extérieur à partir de l'au moins une partie de corps pour définir le contour extérieur ; et
au moins l'une de la pluralité de broches de contour de corps comprenant au moins un capteur de pression pour détecter la quantité de pression exercée par un article porté sur l'au moins une broche de contour de corps ; et
l'interface de données permettant de relayer la quantité détectée de pression au client.

2. Mannequin selon la revendication 1, portant un article d'habillement pour ainsi fournir au client une vue tridimensionnelle réaliste de son apparence s'il portait l'article de l'habillement.

3. Mannequin selon la revendication 1, la pluralité de parties de corps comprenant des bras (16), des jambes (18), un cou (14) et un torse (12).

4. Mannequin selon la revendication 3, comprenant en outre des pieds.

5. Mannequin selon la revendication 1, les broches de contour de corps étant en outre conçues pour être rétractées à partir de leur position déployée.

6. Mannequin selon la revendication 5, les broches de contour de corps étant télescopiques de sorte que leur déploiement/rétraction ne modifie que l'emplacement physique d'une extrémité distale des broches.

7. Mannequin selon la revendication 1, la pluralité de dispositifs pouvant être verrouillé en position une fois un ajustement requis effectué.

8. Mannequin selon la revendication 1, la pression détectée étant affichée sur un écran visuel pour indiquer la pression détectée.

9. Mannequin selon la revendication 1, au moins certaines des broches de contour de corps étant sensibles à la pression et plus vers l'intérieur selon la quantité de pression appliquée par l'article porté.

10. Mannequin selon la revendication 1, comprenant en outre une couche externe de matière qui reproduit au moins l'une des caractéristiques de la peau humaine.

11. Système visant à faciliter la fabrication, la modification et/ou l'achat d'articles portés, le système comprenant :
un moyen de mesure pour obtenir les caractéristiques physiques extérieures d'un client potentiel ; et
un mannequin ajustable ayant une interface de données ; et
une pluralité de dispositifs ajustables permettant d'ajuster leurs dimensions physiques pour définir un contour extérieur du mannequin en fonction des données reçues de l'interface, la pluralité de dispositifs ajustables comprenant :
une pluralité de parties de corps, et
une pluralité de broches de contour de corps disposées sur une ou plusieurs parties de corps,
au moins une dimension d'au moins une partie de corps étant ajustable et les broches de contour de corps étant conçues pour se déployer vers l'extérieur à partir de l'au moins une partie de corps pour définir le contour extérieur ;
les données représentant les dimensions physiques extérieures du client potentiel ;
le mannequin portant un article après que le mannequin a adopté les caractéristiques physiques extérieures pour ainsi fournir au client potentiel une vision de son apparence s'il portait l'article de l'habillement ;
comprenant en outre des capteurs de pression associés aux broches de contour de corps individuelles pour fournir une indication de l'ajustement d'un article, l'interface de données permettant de relayer la quantité détectée de pression au client.

12. Système selon la revendication 11, les caractéristiques physiques comprenant les dimensions du client, y compris la hauteur, la longueur et la largeur d'au moins certaines parties de corps.

13. Système selon la revendication 11, les broches de contour de corps étant sensibles à la pression et se déplaçant vers l'intérieur sous l'effet de la pression exercée par un article porté.

14. Système selon la revendication 11 conçu pour être utilisé dans un environnement de vente au détail, moyennant quoi le mannequin est une structure physique qui ressemble à un corps humain et les articles portés sont des articles d'habillement.

15. Procédé visant à faciliter la fabrication, la modification et/ou l'achat d'articles portés, le procédé comprenant les étapes consistant à :
obtenir les dimensions physiques extérieures requises d'un client potentiel ;
permettre à un mannequin ajustable selon la revendication 1 d'adopter les dimensions physiques extérieures ; et
faire porter l'article par le mannequin pour permettre ainsi au client potentiel de voir son apparence s'il portait l'article.

16. Procédé selon la revendication 15, l'obtention des dimensions physiques extérieures d'un client potentiel comprenant l'étape consistant à obtenir les dimensions du client telles que la hauteur, la longueur et la largeur de diverses parties de corps.

17. Procédé selon la revendication 15, l'obtention des dimensions physiques extérieures comprenant l'étape consistant à obtenir le contour extérieur ou la section transversale d'au moins certaines parties de corps.

18. Procédé selon la revendication 15, le fait que le mannequin ajustable soit amené à adopter les dimensions physiques extérieures d'un client potentiel comprenant l'étape consistant à ajuster le mannequin pour qu'il adopte les dimensions extérieures du client potentiel.

19. Procédé selon la revendication 15, comprenant en outre l'étape consistant à fournir des images au client de l'article porté par le mannequin.

20. Procédé selon la revendication 19, les images étant communiquées au client par l'utilisation d'un réseau de communication de données.

21. Procédé selon la revendication 20, le client utilisant un dispositif de communication personnelle pour recevoir les images représentant l'article porté par le mannequin et utilisant un logiciel exécuté sur le dispositif de communication personnelle pour commander ou refuser l'achat et la livraison de l'article.

22. Procédé selon la revendication 21, l'article étant un article d'habillement et le client utilisant le logiciel pour sélectionner un article d'habillement présentant un intérêt parmi une série d'images de vêtements disponibles à l'achat.

23. Procédé selon la revendication 22, le client choisissant un article d'habillement présentant un intérêt et fournissant ses dimensions physiques extérieures avec une demande de faire porter l'article à un mannequin ajusté aux dimensions physiques extérieures du client.

24. Procédé selon la revendication 23, après avoir reçu des images de l'article d'habillement porté par le mannequin, le client utilisant le logiciel exécuté sur le dispositif de communication personnelle pour demander d'apporter des modifications à l'article afin d'améliorer la façon dont il est porté.

25. Procédé selon l'une quelconque des revendications 22 à 24, une vendeuse transmettant au client des recommandations concernant d'autres articles d'habillement et/ou d'autres tailles d'articles d'habillement pouvant intéresser le client.

26. Procédé selon l'une quelconque des revendications 22 à 25, la vendeuse transmettant au client des recommandations concernant des modifications apportées à l'article d'habillement porté par le mannequin pour mieux satisfaire aux exigences et/ou préférences du client.

27. Procédé selon la revendication 15, comprenant en outre l'étape consistant à mémoriser les dimensions physiques extérieures des clients potentiels.
